# EUROPEAN PATENT APPLICATION

(11) **EP 3 076 353 A1**
(43) Date of publication of application: **05.10.2016**
(21) Application number: 15162191.9
(22) Date of filing: 01.04.2015
(51) Int. Cl.: G06Q 20/02, G06Q 20/20, G06Q 20/32

(54) **METHODS AND DEVICES FOR PURCHASE OF AN ITEM**

(71) Applicant: Spotify AB, 113 56 Stockholm (SE)
(72) Inventor: Afzelius, Jens, 123 55 FARSTA (SE)
(74) Representative: Kransell & Wennborg KB

(57) **Abstract**

The present disclosure relates to a network server 3 of a service provider providing a service. The method comprises receiving a detection message from a mobile radio device 1 running the service for a user registered with the service provider. The registration comprises payment details of the user. The message comprises an indication that said radio device has detected a radio transmitter 2 as well as comprising an identifier of said radio transmitter. The method also comprises determining that the radio transmitter is associated with a purchase order comprising a price of at least one item in a store 4. The method also comprises sending a purchase order message, comprising information about the purchase order, to the mobile radio device, in response to which a user confirmation message is received, confirming the purchase order. The method also comprises sending a payment request to a payment executor, instructing the payment executor to execute payment of the price using the payment details of the user, in response to which a payment confirmation is received. The method also comprises sending a customer receipt to the mobile radio device, and sending a payment confirmation message to a cashier server arrangement 11 of the store.

## Description

### TECHNICAL FIELD

The present disclosure relates to methods and devices for facilitating purchase of an item in a store.

### BACKGROUND

Radio terminals such as smartphones have data connectivity via Wi-Fi and/or cellular radio networks and may thus obtain services from service providers over the Internet. For instance, services may provide streaming media such as music or movies. Users of such services may be registered with the respective service provider with information comprising payment details of the user, e.g., for subscription updates/renewals or other purchases from the service provider.

### SUMMARY

The present invention facilitates the purchase of an item in a store by means of payment details of the customer as already registered in a user profile with a service provider. Thereby, the service provider may assist in executing the payment of the item, using the registered payment details (e.g. debit/credit card, bank account direct payment or the like), without the user (who is also the customer of the store) having to present payment means (e.g. debit/credit card or cash) in the store.

According to an aspect of the present invention, there is provided a method performed in a network server arrangement of a service provider providing a service. The method comprises receiving a detection message from a mobile radio device running the service for a user registered with the service provider. The registration comprises payment details of the user. The detection message comprises an indication that said radio device has detected a radio transmitter as well as an identifier of said radio transmitter. The method also comprises determining that the radio transmitter, as identified by the received identifier, is registered with the service provider by checking in a transmitter database in the server arrangement in which database the identifier of the radio transmitter is stored and linked to information about a store. The method also comprises determining that the radio transmitter is associated with a purchase order comprising a price of at least one item in the store by detecting information about the purchase order stored in a purchase order database in the server arrangement. The information is linked to the identifier of the radio transmitter. The method also comprises sending a purchase order message, comprising information about the purchase order, to the mobile radio device. The method also comprises receiving, in response to the purchase order message, a user confirmation message from the mobile radio device, confirming the purchase order. The method also comprises sending a payment request to a payment executor, instructing the payment executor to execute payment of the price using the payment details of the user. The method also comprises receiving a payment confirmation from the payment executor, confirming the payment of the price. The method also comprises sending a customer receipt to the mobile radio device, for informing the user that the payment has been executed. The method also comprises sending a payment confirmation message to a cashier server arrangement of the store, for indicating that the payment has been executed.

According to another aspect of the present invention, there is provided a method performed in a mobile radio device running a service provided by a service provider, for facilitating purchase of at least one item in a store by a user of the radio device. The method comprises detecting a radio transmitter by receiving, from said radio transmitter, radio signals comprising an identifier message comprising an identifier of the radio transmitter. The method also comprises, in response to said detecting of the radio transmitter, automatically sending a detection message over a radio interface to a network server arrangement of the service provider, said message comprising an indication that the radio device has detected the radio transmitter as well as comprising the identifier of said radio transmitter. The method also comprises, in response to the sent detection message, receiving a purchase order message from the network server arrangement, the purchase order message comprising information about a purchase order comprising a price of the at least one item in the store. The method also comprises obtaining confirmation of the purchase order via a user interface of the radio device. The method also comprises, in response to the obtained confirmation, automatically sending a user confirmation message to the network server arrangement, confirming the purchase order. The method also comprises receiving a customer receipt from the network server arrangement, indicating that payment of the price has been executed.

According to another aspect of the present invention, there is provided a method performed by a cashier server arrangement of a store selling at least one an item for a price to a customer who is a user of a mobile radio device running a service provided by a service provider. The method comprises obtaining, via a user interface, an indication that the at least one item is being purchased. The method also comprises sending a purchase order comprising the price of the at least one item to a network server arrangement of the service provider, said purchase order also comprising an identifier of a radio transmitter in the store for indicating that the purchase order is associated with said radio transmitter. The method also comprises allowing the radio transmitter to broadcast radio signals comprising an identifier message comprising the identifier of the radio transmitter. The method also comprises receiving a payment confirmation message from the network server arrangement indicating that payment of the price has been executed.

According to another aspect of the present invention, there is provided a computer program product comprising computer-executable components for causing a processing device (e.g. the network server arrangement, the mobile radio device or the cashier server arrangement discussed herein) to perform an embodiment of a method of the present disclosure when the computer-executable components are run on processor circuitry comprised in the processing device.

According to another aspect of the present invention, there is provided a network server arrangement for a service provider providing a service. The network server arrangement comprises processor circuitry, and a storage unit storing instructions executable by said processor circuitry whereby said server arrangement is operative to receive a detection message from a mobile radio device running the service for a user registered with the service provider, said registration comprising payment details of the user, said message comprising an indication that said radio device has detected a radio transmitter as well as comprising an identifier of said radio transmitter. The server arrangement is also operative to determine that the radio transmitter, as identified by the received identifier, is registered with the service provider by checking in a transmitter database in the server arrangement in which database the identifier of the radio transmitter is stored and linked to information about a store. The server arrangement is also operative to determine that the radio transmitter is associated with a purchase order comprising a price of at least one item in the store by detecting information about the purchase order stored in a purchase order database in the server arrangement, which information is linked to the identifier of the radio transmitter. The server arrangement is also operative to send a purchase order message, comprising information about the purchase order, to the mobile radio device. The server arrangement is also operative to receive, in response to the purchase order message, a user confirmation message from the mobile radio device, confirming the purchase order. The server arrangement is also operative to send a payment request to a payment executor, instructing the payment executor to execute payment of the price using the payment details of the user. The server arrangement is also operative to receive a payment confirmation from the payment executor, confirming the payment of the price. The server arrangement is also operative to send a customer receipt to the mobile radio device, for informing the user that the payment has been executed. The server arrangement is also operative to send a payment confirmation message to a cashier server arrangement of the store, for indicating that the payment has been executed.

According to another aspect of the present invention, there is provided a mobile radio device configured for running a service provided by a service provider, and for facilitating purchase of at least one item in a store by a user of the radio device. The radio device comprises processor circuitry, and a storage unit storing instructions executable by said processor circuitry whereby said radio device is operative to detect a radio transmitter, by receiving, from said radio transmitter, radio signals comprising an identifier message comprising an identifier of the radio transmitter. The radio device is also operative to, in response to said detecting of the radio transmitter, automatically send a detection message over a radio interface to a network server arrangement of the service provider, said message comprising an indication that the radio device has detected the radio transmitter as well as comprising the identifier of said radio transmitter. The radio device is also operative to, in response to the sent detection message, receive a purchase order message from the network server arrangement, comprising information about a purchase order comprising a price of the at least one item in the store. The radio device is also operative to obtain confirmation of the purchase order via a user interface of the radio device. The radio device is also operative to, in response to the obtained confirmation, automatically send a user confirmation message to the network server arrangement, confirming the purchase order. The radio device is also operative to receive a customer receipt from the network server arrangement, indicating that payment of the price has been executed.

According to another aspect of the present invention, there is provided a cashier server arrangement for a store selling at least one an item for a price to a customer who is a user of a mobile radio device running a service provided by a service provider. The cashier server arrangement comprises processor circuitry, and a storage unit storing instructions executable by said processor circuitry whereby said server arrangement is operative to obtain, via a user interface, an indication that the at least one item is being purchased. The server arrangement is also operative to send a purchase order comprising the price of the at least one item to a network server arrangement of the service provider, said purchase order also comprising an identifier of a radio transmitter in the store for indicating that the purchase order is associated with said radio transmitter. The server arrangement is also operative to allow the radio transmitter to broadcast radio signals comprising an identifier message comprising the identifier of the radio transmitter. The server arrangement is also operative to receive a payment confirmation message from the network server arrangement indicating that payment of the price has been executed.

According to another aspect of the present invention, there is provided a computer program for a network server arrangement of a service provider providing a service. The computer program comprises computer program code which is able to, when run on processor circuitry of the server arrangement, cause the server arrangement to receive a detection message from a mobile radio device running the service for a user registered with the service provider, said registration comprising payment details of the user, said message comprising an indication that said radio device has detected a radio transmitter as well as comprising an identifier of said radio transmitter. The code is also able to cause the server arrangement to determine that the radio transmitter, as identified by the received identifier, is registered with the service provider by checking in a transmitter database in the server arrangement in which database the identifier of the radio transmitter is stored and linked to information about a store. The code is also able to cause the server arrangement to determine that the radio transmitter is associated with a purchase order comprising a price of at least one item in the store by detecting information about the purchase order stored in a purchase order database in the server arrangement, which information is linked to the identifier of the radio transmitter. The code is also able to cause the server arrangement to send a purchase order message, comprising information about the purchase order, to the mobile radio device. The code is also able to cause the server arrangement to receive, in response to the purchase order message, a user confirmation message from the mobile radio device, confirming the purchase order. The code is also able to cause the server arrangement to send a payment request to a payment executor, instructing the payment executor to execute payment of the price using the payment details of the user. The code is also able to cause the server arrangement to receive a payment confirmation from the payment executor, confirming the payment of the price. The code is also able to cause the server arrangement to send a customer receipt to the mobile radio device, for informing the user that the payment has been executed. The code is also able to cause the server arrangement to send a payment confirmation message to a cashier server arrangement of the store, for indicating that the payment has been executed.

According to another aspect of the present invention, there is provided an application software for enabling a mobile radio device to run a service provided by a service provider for facilitating purchase of at least one item in a store by a user of the radio device. The application software comprises computer program code which is able to, when run on processor circuitry of the radio device, cause the radio device to detect a radio transmitter by receiving, from said radio transmitter, radio signals comprising an identifier message comprising an identifier of the radio transmitter. The code is also able to cause the radio device to, in response to said detecting of the radio transmitter, automatically send a detection message over a radio interface to a network server arrangement of the service provider, said message comprising an indication that the radio device has detected the radio transmitter as well as comprising the identifier of said radio transmitter. The code is also able to cause the radio device to, in response to the sent detection message, receive a purchase order message from the network server arrangement, comprising information about a purchase order comprising a price of the at least one item in the store. The code is also able to cause the radio device to obtain confirmation of the purchase order via a user interface of the radio device. The code is also able to cause the radio device to, in response to the obtained confirmation, automatically send a user confirmation message to the network server arrangement, confirming the purchase order. The code is also able to cause the radio device to receive a customer receipt from the network server arrangement, indicating that payment of the price has been executed.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of a communication system in accordance with embodiments of the present invention.
Fig 2 is a schematic block diagram of an embodiment of a server of a network or cashier server arrangement in accordance with the present invention.
Fig 3 is a schematic block diagram of an embodiment of a mobile radio device in accordance with the present invention.
Fig 4 is a schematic illustration of an embodiment of a computer program product in accordance with the present invention.
Fig 5 is a schematic signalling diagram of embodiments of the present invention.
Fig 6 is a schematic flow chart of embodiments of a method performed by a network server arrangement, in accordance with the present invention.
Fig 7 is a schematic flow chart of embodiments of a method performed by a mobile radio device, in accordance with the present invention.
Fig 8 is a schematic flow chart of embodiments of a method performed by a cashier server arrangement, in accordance with the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

A server arrangement, as used herein, especially a network server arrangement and/or a cashier server arrangement, may comprise one or a plurality of, possibly geographically dispersed, physical servers. In the following, the term "server" is used interchangeably with the term "server arrangement". Thus, a "server" is not necessarily limited to a single physical server unit.

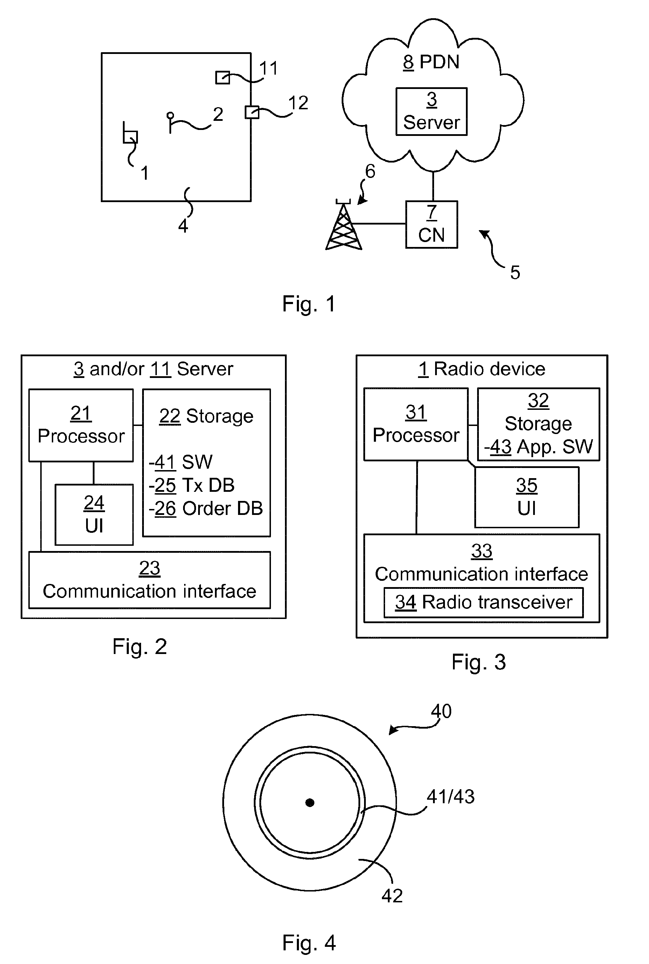

Figure 1 illustrates some example embodiments of the present invention. A mobile radio device 1 is in a store 4 and is running application software, i.e. an app, e.g. for streaming media, for a service provided by a service provider which in the figure is represented by the network server 3 but may also have many further servers. In figure 1, one radio device 1 is shown as an example for illustrating the present invention. However, any number of radio devices running, or not running, the application software may be present in the store 4. A radio transmitter 2 is also located in the store 4, e.g., a store in a shopping mall or on a street. The radio transmitter 2 may, in some embodiments, be attached/fastened to an item for sale in the store, or be otherwise associated with the item (e.g. be placed close by, and relate to a plurality of items of the same type and price e.g., a type of shirt). In other embodiments, the radio transmitter 2 may be positioned at, and associated with, a cash register or cashier desk, where a staff (or possibly the customer himself or herself) of the store can scan or otherwise enter an item for purchase of the same into a cashier server 11 of the store 4.

The radio transmitter 2 may be any type of radio transmitter but it may be convenient to use a radio transmitter which transmits in accordance with the Bluetooth Low Energy (BLE) standard whereby the radio transmitter may act as a BLE beacon. The range of such a transmitter may be controlled as desired by setting the transmission power. Thus, the radio transmitter 2 is registered with the service provider and associated with the store, and possibly with a specific cashier desk or item/type of item in the store 4. If the radio device 1 running the service of the service provider (typically by means of the app mentioned herein) gets within range of the transmitter 2, the service may cause the radio device to automatically inform the service provider thereof e.g. by sending a detection message to the network server 3. There may be any number of radio transmitters 2 in the store 4, e.g., one per cashier desk, one per item for sale or one per type of item for sale.

The mobile radio device 1 may be any devices able to communicate over a radio interface, typical examples include a smartphone or a tablet, or any other mobile media player. The radio device 1 may use any radio communication standard to connect to the server 3 of the service provider, e.g. a wireless local area network (WLAN) or a cellular network, typically in accordance with a Third Generation Partnership Project (3GPP) standard. In the figure, the radio device 1 has connectivity via a cellular radio communication network 5 comprising a radio access network (RAN) 6 and a core network (CN) 7 which provides access to a packet data network (PDN) 8, e.g. the Internet, via which the network server 3 is accessible.

Also the cashier server 11 may be able to communicate with the network server 3, by wireless or wired connection with the PDN 8. Thus, the cashier server 11 may send a purchase order for the item being purchased to the network server 3, including information about the radio transmitter 2 the purchase is associated with.

The network server 3 may communicate with a payment executor (not shown) e.g. a bank or credit card company, via the PDN 8 for ensuring that the price of the purchased item(s) is paid.

The store 4 may optionally also have a radio receiver 12 which may detect radio signals from the radio transmitter 2. Thus, e.g. if an item for sale is tagged by having a radio transmitter 2 fastened to it, the radio receiver 12 may detect that the radio transmitter 2 (and thus the item) is leaving the store 4, and may alert staff or the cashier server 11. The cashier server 11 may then check whether the item has been paid or not, and determine whether to start an alarm. The radio receiver 12 may conveniently be placed at an exit of the store 4, e.g. as part of an entry/exit detector arrangement of the store. However, in other embodiments, the radio receiver 12 may be placed anywhere inside the store but able to detect the radio signals and thus able to deduce, based on the signal strength or the sudden absence of a signal, that the transmitter 2 is moved, e.g., out of the store.

Figure 2 schematically illustrates an embodiment of a network server 3 of the service provider or a cashier server 11 of the store 4, of the present disclosure. The server 3 or 11 comprises processor circuitry 21, e.g., a central processing unit (CPU). The processor circuitry 21 may comprise one or a plurality of processing units in the form of microprocessor(s). However, other suitable devices with computing capabilities could be comprised in the processor circuitry 21, e.g. an application specific integrated circuit (ASIC), a field programmable gate array (FPGA) or a complex programmable logic device (CPLD). The processor circuitry 21 is configured to run one or several computer program(s) or software (SW) 41 (see also figure 4) stored in a storage 22 of one or several storage unit(s) e.g. a memory. The storage 22 may further comprise one or several data bases. For example, the network server 3 may comprise a transmitter (Tx) database (DB) 25 in which radio transmitter(s) 2 may be registered together with information thereof, e.g., about the store 4, as well as an order DB 26 in which one or more purchase orders may be stored together with its respective radio transmitter identifier (ID). The storage unit is regarded as a computer readable means 42 (see figure 4) as discussed herein and may e.g. be in the form of a Random Access Memory (RAM), a Flash memory or other solid state memory, or a hard disk, or be a combination thereof. The processor circuitry 21 may also be configured to store data in the storage 22, as needed. The server 3 or 11 also comprises a communication interface 23 for communicating with other nodes via the communication network, e.g. with a radio device 1 as discussed herein or with other servers of the service provider or store. Optionally, the server 3 or 11 comprises a user interface (UI) 24 for allowing a user to input information to the server and/or for allowing the server to output information to a user. A cashier or customer of the store, or an operator of the service provider, may input information about an item or items to be purchased via the UI 24.

Figure 3 schematically illustrates an embodiment of a mobile radio device 1 of the present disclosure. The radio device 1 comprises processor circuitry 31 e.g. a central processing unit (CPU). The processor circuitry 31 may comprise one or a plurality of processing units in the form of microprocessor(s). However, other suitable devices with computing capabilities could be comprised in the processor circuitry 31, e.g. an application specific integrated circuit (ASIC), a field programmable gate array (FPGA) or a complex programmable logic device (CPLD). The processor circuitry 31 is configured to run one or several computer program(s) or software (SW) 43 (see also figure 4), e.g. an application software (app), stored in a storage 32 of one or several storage unit(s) e.g. a memory. The storage unit is regarded as a computer readable means 42 (see figure 4) as discussed herein and may e.g. be in the form of a Random Access Memory (RAM), a Flash memory or other solid state memory, or a hard disk, or be a combination thereof. The processor circuitry 31 may also be configured to store data in the storage 32, as needed. The radio device 1 also comprises a communication interface 33 having a radio transceiver 34 for radio communication with other nodes via the communication network, e.g. with a network server 3 of the service provider via a RAN 6. The radio device 1 also comprises a user interface (UI) 35 for allowing a user to input information to the server and/or for allowing the server to output information to a user. The user interface may e.g. comprise a touchscreen and/or one or several buttons, typically a touchscreen if the radio device 1 is a smartphone.

Figure 4 illustrates a computer program product 40. The computer program product 40 comprises a computer readable (e.g. non-volatile) medium 42 comprising a computer program 41/43 in the form of computer-executable components. The computer program (41/43)/computer-executable components may be configured to cause a processing device such as a radio device 1 or network/cashier server 3/11, e.g. as discussed herein, to perform an embodiment of a method of the present disclosure. The computer program/computer-executable components may be run on the processor circuitry 21/31 of the device/server for causing the device/server to perform the method. The computer program product 40 may e.g. be comprised in a storage unit or memory 22/32 comprised in the device 1 or server 3/11 and associated with the processor circuitry 21/31. Alternatively, the computer program product 40 may be, or be part of, a separate, e.g. mobile, storage means, such as a computer readable disc, e.g. CD or DVD or hard disc/drive, or a solid state storage medium, e.g. a RAM or Flash memory.

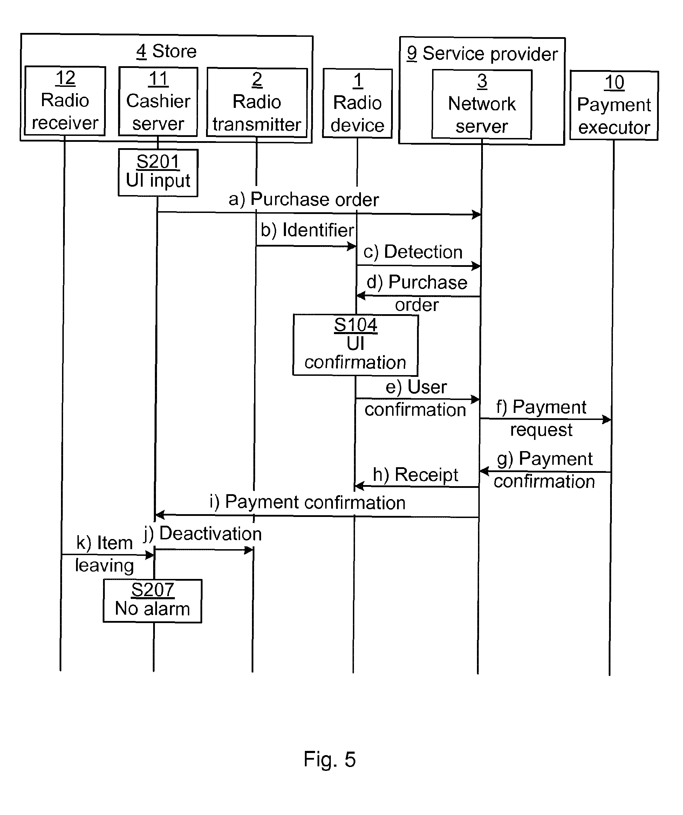

Figure 5 is a schematic signalling diagram illustrating some embodiments of the invention. As mentioned herein, a purchase order is, in the network server 3, associated with a radio transmitter 2 of the store 4. In some embodiments, the purchase order is preprogramed in the network server 3 of the service provider 9, for instance if the radio transmitter 2 is a tag which is fastened to the item being purchased in which case e.g. all items in the store 4 is tagged with a respective radio transmitter 2 and information has been inputted in the network server associating each transmitter 2 with the price (and possibly also other information) of the item which it is a tag of, thus forming the purchase order.

An alternative, which is part of other embodiments, the a purchase order a) is sent from the cashier server 11 after the item has been scanned at a cashier desk whereby information about the item or items being purchased is inputted S201 via the UI 24 e.g. a cash register barcode scanner. A customer of the store 4 may thus take an item or items it intends to purchase to a cashier desk in the store. A cashier staff may in a regular way scan the item, whereby the cashier server 11 creates the purchase order a) with the price of the item. The cashier server 11 also links/associates the purchase order with a radio transmitter 2 at the cashier desk. When the purchase order has been sent to the network server 3, the network server is informed that a customer is trying to purchase the item and that the purchase is associated with the radio transmitter 2 which is identified with an identifier, e.g. an ID number. The purchase order may be stored in the order DB 26 discussed herein. Since the transmitter 2 is registered (by its identifier) with the service provider 9 in the network server 3, e.g. in the transmitter DB 25, the network server 3 knows that the transmitter 2 is eligible and which store it is in (thus in which store 4 the item is being purchased). Alternatively, the store 4 may be identified by the cashier server 11 informing the network sever 3.

The customer is also a user of the service provided by the service provider 9, why payment details of the customer are registered in the network server 3, e.g. in a user DB therein. Thus, radio device (e.g. smartphone) of the customer, and running the app, can detect the transmitter 2 by receiving an identifier signal b) comprising the identifier of the transmitter, which is typically broadcasted by the transmitter, whereby the radio device sends a detection message c), comprising the identifier, to the network server 3. The service provider 9 is thus informed that it is that user, having that radio device, which is a customer of the store 4 and who should pay for the item in accordance with the purchase order associated with the transmitter 2 (whether preprogramed or received from the cashier server 11).

Then, the network server 3 sends the purchase order to the radio device. The user/customer can then confirm the purchase, e.g. by clicking a button on the touchscreen of the smartphone 1, inputting S104 a confirmation via the UI 35. In response to the confirmation, the radio device 1 sends a user confirmation message e) to the network server 3.

When the service provider 9 has received confirmation of the purchase order from the user, the network server 3 sends a payment request f) to a payment executor 10, e.g. a bank or credit card company. The executor 10 executes the payment of the price of the purchase order using the payment details of the user as registered with the service provider 9. Then, the executor 10 sends a payment confirmation g) to the network server 3 whereby the service provider is informed that payment has been made of the price of the item purchased by the user.

Then, the network server sends confirmation messages to both its user and to the store, e.g. in the form of a customer receipt h) to the radio device 1 (which is thus received by the user of its service) and a payment confirmation message i) to the cashier server 11 of the store 4.

Optionally, if the transmitter 2 is fastened as a tag to the item being purchased, the customer may be able to purchase the item without the need to go to a cashier desk. In such embodiments, upon detecting the identifier signal b), the customer may receive the purchase order message d) from the network server 3, at which time the customer may confirm S104 or discard the purchase. It may then be convenient for the store 4 to be able to turn off the transmitter 2 after the payment confirmation i) has been received in order to e.g. prevent an alarm to be set off when the transmitter 2 leaves the store, as detected by the radio receiver 12 discussed herein. The cashier server may thus send a deactivation message j) to the radio transmitter 2. Additionally or alternatively, the radio receiver 12 may detect that the transmitter 2, and thus the item it is fastened to, is leaving the store 4 e.g. by the signal it receives from the transmitter is getting fainter or disappears. The radio receiver 12 may then send an item leaving message k) to the cashier server 11, which may then decide S207 not to start sounding an alarm or the like since it has received the payment confirmation i) for the transmitter of the item.

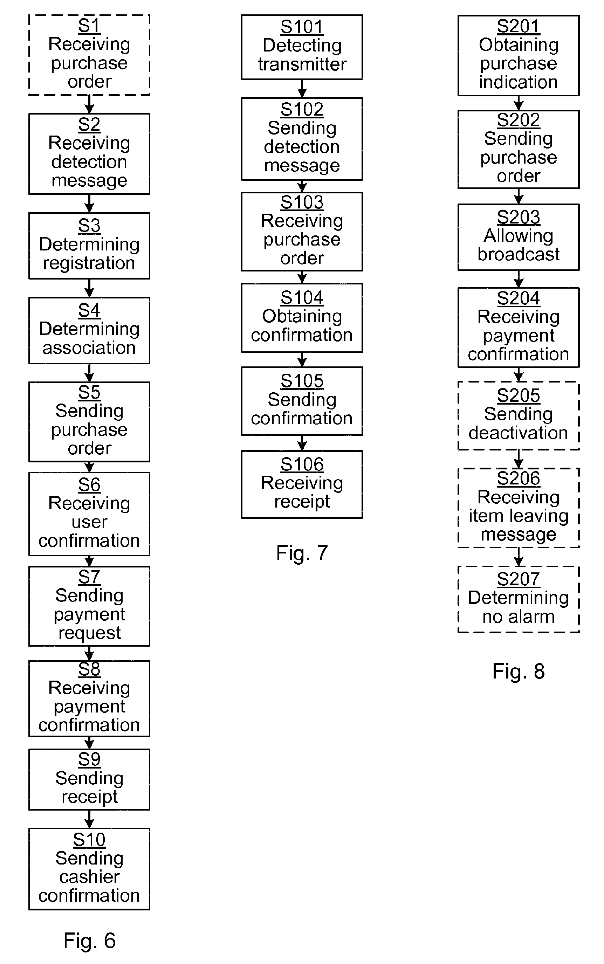

Figure 6 is a schematic flow chart of embodiments of a method of the present invention, performed by the service provider 9, typically in the network server arrangement 3.

As an optional first step, the server 3 receives S1 a purchase order a) from the cashier server arrangement 11 of the store 4. The purchase order a) comprises the identifier of the radio transmitter 2, for indicating that the purchase order is associated with said radio transmitter. The server 3 also stores the purchase order in the purchase order database 26, allowing the server 3 to, in the later step S4, determine that the radio transmitter 2 is associated with the purchase order.

Regardless of whether the purchase order has been received from the store 4, or if it e.g. is preprogramed in the purchase order database 26 (e.g. if the transmitter 2 only relates to a certain item or type of items offered for purchase), the network server 3 receives S2 a detection message c) from a mobile radio device 1 (e.g., a smartphone of a customer in the store 4). The radio device is running the service of the service provider for a user of the service (who is typically also the customer). The user is registered with the service provider 9, and the registration comprises payment details of the user. The detection message c) comprises an indication that said radio device has detected a radio transmitter 2 and comprises an identifier of said radio transmitter. As mentioned herein, the service application running on the radio device may cause the radio device to automatically report to the service provider when it detects a predefined type of radio transmitter, e.g. a BLE transmitter.

The server 3 then determines S3 that the radio transmitter 2, as identified by the received S2 identifier, is registered with the service provider 9. This may be done by checking in the transmitter database 25 in the network server arrangement 3, in which database 25 the identifier of the radio transmitter 2 is stored and linked to information about the store 4. Typically, the store may have registered its transmitter(s) 2with the service provider 9, or the transmitter(s) 2, which are located in the store, may be owned by the service provider 9 who has placed (lent or rented) them to the store, for enabling payment of the item(s) by means of the payment details registered with the service provider.

Regardless of whether the purchase order a) has been received S1 from the store 4, or if it e.g. is preprogramed in the purchase order database 26, the purchase order is stored in the purchase order database 26 and associated with the identifier of its corresponding transmitter 2. Thus, the network server 3 can determine S4 that the radio transmitter 2 (which the radio device 1 has detected) is associated with the purchase order. The purchase order comprises a price of the one or several item(s) in the store 4 which the customer (who is also the user of the service) is purchasing. The network server 3 can perform the determining S4 by detecting information about the purchase order stored in the purchase order database 26 in the network server arrangement 3. The purchase order information is linked to the identifier of the radio transmitter 2. Thus, the network server knows which purchase order should be sent to the mobile radio device 1, since both the radio device and the purchase order have now been determined to be associated with the same radio transmitter 2.

Then, the network server 3 sends S5 a purchase order message d), comprising information about the purchase order, to the mobile radio device 1. Thus, the customer/user is, via its radio device 1, informed about e.g., the price and items of the purchase order. If the purchase order is correct, the user will confirm it, whereby the radio device sends back the user confirmation message e) to the network server 3.

Thus, the network server 3, in response to the purchase order message d), receives S6 a user confirmation message e) from the mobile radio device 1, confirming the purchase order.

Then, the network server 3 sends S7 a payment request f) to the payment executor 10, instructing the payment executor to execute payment of the price of the purchase order, using the payment details of the user (as registered with the service provider).

In response to the payment request f), the network server 3 receives S8 a payment confirmation g) from the payment executor 10, confirming the payment of the price. The service provider now knows that the purchased items have been duly paid and can inform its service user as well as the store 4 about this.

Thus, the network server 3 sends S9 a customer receipt h) to the mobile radio device 1, for informing the user that the payment has been executed. The network server 3 also sends S10 a payment confirmation message i) to the cashier server arrangement 11 of the store 4, for indicating to the store that the payment has been executed.

Figure 7 is a schematic flow chart of embodiments of a method of the present invention, performed by the mobile radio device 1 of the service user/customer.

The radio device 1 detects S101 the radio transmitter 2 by receiving, from said radio transmitter, radio signals comprising an identifier message b) comprising the identifier of the radio transmitter.

In response to the detecting S101 of the radio transmitter 2, the radio device 1 automatically sends S102 a detection message c) over a radio interface to the network server arrangement 3 of the service provider 9. The detection message c) comprises an indication that the radio device 1 has detected S101 the radio transmitter 2. The detection message c) also comprises the identifier of the radio transmitter.

In response to the sent S102 detection message c), the radio device 1 receives S103 a purchase order message d) from the network server arrangement 3. The purchase order message d) comprises information about a purchase order comprising a price of the at least one item in the store 4 which the user is in the process of purchasing.

The radio device 1 obtains S104 confirmation of the purchase order via a user interface 35 of the radio device 1. This implies that the user confirms the purchase order, i.e. that the user wants to buy the item(s) in accordance with the purchase order.

In response to the obtained S104 confirmation, the radio device 1 sends S105 a user confirmation message e) to the network server arrangement 3, confirming the purchase order to the service provider 9.

Then, the radio device 1 receives S106 a customer receipt h) from the network server arrangement 3, indicating to the radio device and the user thereof that payment of the price has been executed.

Figure 8 is a schematic flow chart of embodiments of a method of the present invention, performed by the store 4, i.e. in the cashier server arrangement 11 of the store.

The cashier server 11 obtains S201, via a user interface 24, an indication that the at least one item is being purchased. Typically, the at least one item is scanned by a cashier staff of the store 4, or by the customer itself, whereby the cashier server 11 is informed which item(s) the customer wants to purchase.

Then, the cashier server sends S202 a purchase order a) comprising the price of the at least one item to the network server arrangement 3 of the service provider 9. The purchase order also comprises an identifier of the radio transmitter 2 in the store 4 for indicating that the purchase order is associated with said radio transmitter.

Before, after or during, the cashier server 11 allows S203 the radio transmitter 2 to broadcast radio signals comprising an identifier message b) comprising the identifier of the radio transmitter. Although, the radio transmitter 2 may, in some embodiments, broadcast independently of the cashier server 11, it may be convenient to let the cashier server 11 control the transmitter 2, e.g. for conserving energy (especially if the transmitter runs on battery) if there is no need for the transmitter to transmit constantly.

To obtain confirmation that the item(s) has been paid for, the cashier server 11 receives S204 the payment confirmation message i) from the network server arrangement 3, which payment confirmation message i) indicates that payment of the price has been executed.

Optionally, the cashier server 11 may, in response to the received S204 payment confirmation message i), send S205 a deactivation signal j) to the radio transmitter 2 (regardless of whether the transmitter is e.g. fastened to the item which has been purchased or to a cashier desk). This may be an alternative to avoid activating the alarm when the item is leaving the store 4 if the transmitter is attached to the bought item, but may also be appropriate if the transmitter is at the cashier (if the transmitter should not transmit all the time).

Optionally, if the radio transmitter 2 is attached to the item, the cashier server 11 may receive S206 an item leaving message k) from a radio receiver 12 which is able to detect the radio signals from the radio transmitter 2. The item leaving message k) indicates to the cashier server 11 that the radio transmitter, and thus presumably the item, is leaving the store 4. Then, if the item has not been properly paid for, the cashier server 11 may automatically take action, e.g. by starting an alarm or otherwise inform staff in the store 4. However, since the payment confirmation message i) has been received S204, the cashier server 11 determines S207 that no alarm should be triggered since the payment of the price has been indicated as executed. The radio receiver 12 may e.g. be at the store exit or within the store but measuring the distance to the transmitter 2 on the item.

Below follow some other aspects of the present invention.

According to an aspect of the present invention, there is provided a network server 3 of a service provider providing a service. A method comprises receiving a detection message from a mobile radio device 1 running the service for a user registered with the service provider. The registration comprises payment details of the user. The message comprises an indication that said radio device has detected a radio transmitter 2 as well as comprising an identifier of said radio transmitter. The method also comprises determining that the radio transmitter is associated with a purchase order comprising a price of at least one item in a store 4. The method also comprises sending a purchase order message, comprising information about the purchase order, to the mobile radio device, in response to which a user confirmation message is received, confirming the purchase order. The method also comprises sending a payment request to a payment executor, instructing the payment executor to execute payment of the price using the payment details of the user, in response to which a payment confirmation is received. The method also comprises sending a customer receipt to the mobile radio device, and sending a payment confirmation message to a cashier server arrangement 11 of the store.

According to another aspect of the present invention, there is provided a computer program 41 for a cashier server arrangement 11 of a store 4 selling at least one an item for a price to a customer who is a user of a mobile radio device 1 running a service provided by a service provider 9. The computer program comprises computer program code which is able to, when run on processor circuitry 21 of the server arrangement, cause the server arrangement to obtain S201, via a user interface 24, an indication that the at least one item is being purchased. The code is also able to cause the server arrangement to send S202 a purchase order a comprising the price of the at least one item to a network server arrangement 3 of the service provider 9, said purchase order also comprising an identifier of a radio transmitter 2 in the store 4 for indicating that the purchase order is associated with said radio transmitter. The code is also able to cause the server arrangement to allow S203 the radio transmitter 2 to broadcast radio signals comprising an identifier message b comprising the identifier of the radio transmitter. The code is also able to cause the server arrangement to receive S204 a payment confirmation message i from the network server arrangement 3 indicating that payment of the price has been executed.

According to another aspect of the present invention, there is provided a computer program product 40 comprising an embodiment of a computer program 41/43 of the present disclosure and a computer readable means on 42 which the computer program is stored.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed in a network server arrangement (3) of a service provider (9) providing a service, the method comprising:
receiving (S2) a detection message (c) from a mobile radio device (1) running the service for a user registered with the service provider (9), said registration comprising payment details of the user, said message comprising an indication that said radio device has detected a radio transmitter (2) as well as comprising an identifier of said radio transmitter;
determining (S3) that the radio transmitter (2), as identified by the received (S2) identifier, is registered with the service provider (9) by checking in a transmitter database (25) in the server arrangement (3) in which database the identifier of the radio transmitter (2) is stored and linked to information about a store (4);
determining (S4) that the radio transmitter (2) is associated with a purchase order comprising a price of at least one item in the store (4) by detecting information about the purchase order stored in a purchase order database (26) in the server arrangement (3), which information is linked to the identifier of the radio transmitter (2);
sending (S5) a purchase order message (d), comprising information about the purchase order, to the mobile radio device (1);
receiving (S6), in response to the purchase order message (d), a user confirmation message (e) from the mobile radio device (1), confirming the purchase order;
sending (S7) a payment request (f) to a payment executor (10), instructing the payment executor to execute payment of the price using the payment details of the user;
receiving (S8) a payment confirmation (g) from the payment executor (10),
confirming the payment of the price;
sending (S9) a customer receipt (h) to the mobile radio device (1), for informing the user that the payment has been executed; and
sending (S10) a payment confirmation message (i) to a cashier server arrangement (11) of the store (4), for indicating that the payment has been executed.

2. The method of claim 1, wherein the purchase order is pre-associated with the radio transmitter (2) in the purchase order database (26) in the network server arrangement (3).

3. The method of claim 1, further comprising:
receiving (S1) the purchase order (a) from the cashier server arrangement (11), said purchase order (a) comprising the identifier of the radio transmitter (2), for indicating that the purchase order is associated with said radio transmitter, and storing the purchase order in the purchase order database (26) before the determining (S4) that the radio transmitter (2) is associated with the purchase order.

4. A method performed in a mobile radio device (1) running a service provided by a service provider (9), for facilitating purchase of at least one item in a store (4) by a user of the radio device, the method comprising:
detecting (S101) a radio transmitter (2) by receiving, from said radio transmitter, radio signals comprising an identifier message (b) comprising an identifier of the radio transmitter;
in response to said detecting (S101) of the radio transmitter (2), automatically sending (S102) a detection message (c) over a radio interface to a network server arrangement (3) of the service provider (9), said message comprising an indication that the radio device (1) has detected (S101) the radio transmitter (2) as well as comprising the identifier of said radio transmitter;
in response to the sent (S102) detection message (c), receiving (S103) a purchase order message (d) from the network server arrangement (3), comprising information about a purchase order comprising a price of the at least one item in the store (4);
obtaining (S104) confirmation of the purchase order via a user interface (35) of the radio device (1);
in response to the obtained (S104) confirmation, automatically sending (S105) a user confirmation message (e) to the network server arrangement (3), confirming the purchase order; and
receiving (S106) a customer receipt (h) from the network server arrangement (3), indicating that payment of the price has been executed.

5. The method of claim 4, wherein the radio device (1) is running the service by means of a dedicated application software (43), which software is configured for automatically reporting any detection (S101) of the radio transmitter (2) to the network server arrangement (3).

6. The method of claim 4 or 5, wherein the radio transmitter (2) is a Bluetooth Low Energy beacon.

7. A method performed by a cashier server arrangement (11) of a store (4) selling at least one an item for a price to a customer who is a user of a mobile radio device (1) running a service provided by a service provider (9), the method comprising:
obtaining (S201), via a user interface (24), an indication that the at least one item is being purchased;
sending (S202) a purchase order (a) comprising the price of the at least one item to a network server arrangement (3) of the service provider (9), said purchase order also comprising an identifier of a radio transmitter (2) in the store (4) for indicating that the purchase order is associated with said radio transmitter;
allowing (S203) the radio transmitter (2) to broadcast radio signals comprising an identifier message (b) comprising the identifier of the radio transmitter; and
receiving (S204) a payment confirmation message (i) from the network server arrangement (3) indicating that payment of the price has been executed.

8. The method of claim 7, further comprising:
in response to the received (S204) payment confirmation message (i), sending (S205) a deactivation signal (j) to the radio transmitter (2).

9. The method of claim 7 or 8, wherein the radio transmitter (2) is attached to the at least one item, the method further comprising:
receiving (S206), from a radio receiver (12) able to detect the radio signals of the radio transmitter (2), an item leaving message (k) indicating that said radio transmitter is leaving the store (4);
in response to receiving (S206) the item leaving message (k), automatically determining (S207) that no alarm should be triggered since the payment of the price has been indicated as executed by the reception (S204) of the payment confirmation message (i).

10. A computer program product (40) comprising computer-executable components (41/43) for causing a processing device (1; 3; 11),to perform the method of any preceding claim when the computer-executable components are run on processor circuitry (21; 31) comprised in the processing device.

11. A network server arrangement (3) for a service provider (9) providing a service, the network server arrangement comprising:
processor circuitry (21); and
a storage unit (22) storing instructions (41) executable by said processor circuitry whereby said server arrangement is operative to:
receive a detection message (c) from a mobile radio device (1) running the service for a user registered with the service provider (9), said registration comprising payment details of the user, said message comprising an indication that said radio device has detected a radio transmitter (2) as well as comprising an identifier of said radio transmitter;
determine that the radio transmitter (2), as identified by the received identifier, is registered with the service provider (9) by checking in a transmitter database (25) in the server arrangement (3) in which database the identifier of the radio transmitter (2) is stored and linked to information about a store (4);
determine that the radio transmitter (2) is associated with a purchase order comprising a price of at least one item in the store (4) by detecting information about the purchase order stored in a purchase order database (26) in the server arrangement (3), which information is linked to the identifier of the radio transmitter (2);
send a purchase order message (d), comprising information about the purchase order, to the mobile radio device (1);
receive, in response to the purchase order message (d), a user confirmation message (e) from the mobile radio device (1), confirming the purchase order;
send a payment request (f) to a payment executor (10), instructing the payment executor to execute payment of the price using the payment details of the user;
receive a payment confirmation (g) from the payment executor (10), confirming the payment of the price;
send a customer receipt (h) to the mobile radio device (1), for informing the user that the payment has been executed; and
send a payment confirmation message (i) to a cashier server arrangement (11) of the store (4), for indicating that the payment has been executed.

12. A mobile radio device (1) configured for running a service provided by a service provider (9), and for facilitating purchase of at least one item in a store (4) by a user of the radio device, the radio device comprising:
processor circuitry (31); and
a storage unit (32) storing instructions (43) executable by said processor circuitry whereby said radio device is operative to:
detect a radio transmitter (2), by receiving, from said radio transmitter, radio signals comprising an identifier message (b) comprising an identifier of the radio transmitter;
in response to said detecting (S101) of the radio transmitter (2), automatically send a detection message (c) over a radio interface to a network server arrangement (3) of the service provider (9), said message comprising an indication that the radio device (1) has detected the radio transmitter (2) as well as comprising the identifier of said radio transmitter;
in response to the sent detection message (c), receive a purchase order message (d) from the network server arrangement (3), comprising information about a purchase order comprising a price of the at least one item in the store (4);
obtain confirmation of the purchase order via a user interface (35) of the radio device (1);
in response to the obtained (S104) confirmation, automatically send a user confirmation message (e) to the network server arrangement (3), confirming the purchase order; and
receive a customer receipt (h) from the network server arrangement (3), indicating that payment of the price has been executed.

13. A cashier server arrangement (11) for a store (4) selling at least one an item for a price to a customer who is a user of a mobile radio device (1) running a service provided by a service provider (9), the cashier server arrangement comprising:
processor circuitry (21); and
a storage unit (22) storing instructions (41) executable by said processor circuitry whereby said server arrangement is operative to:
obtain, via a user interface, an indication that the at least one item is being purchased;
send a purchase order (a) comprising the price of the at least one item to a network server arrangement (3) of the service provider (9), said purchase order also comprising an identifier of a radio transmitter (2) in the store (4) for indicating that the purchase order is associated with said radio transmitter;
allow the radio transmitter (2) to broadcast radio signals comprising an identifier message (b) comprising the identifier of the radio transmitter; and
receive a payment confirmation message (i) from the network server arrangement (3) indicating that payment of the price has been executed.

14. A computer program (41) for a network server arrangement (3) of a service provider (9) providing a service, the computer program comprising computer program code which is able to, when run on processor circuitry (21) of the server arrangement, cause the server arrangement to:
receive (S2) a detection message (c) from a mobile radio device (1) running the service for a user registered with the service provider (9), said registration comprising payment details of the user, said message comprising an indication that said radio device has detected a radio transmitter (2) as well as comprising an identifier of said radio transmitter;
determine (S3) that the radio transmitter (2), as identified by the received (S2) identifier, is registered with the service provider (9) by checking in a transmitter database (25) in the server arrangement (3) in which database the identifier of the radio transmitter (2) is stored and linked to information about a store (4);
determine (S4) that the radio transmitter (2) is associated with a purchase order comprising a price of at least one item in the store (4) by detecting information about the purchase order stored in a purchase order database (26) in the server arrangement (3), which information is linked to the identifier of the radio transmitter (2);
send (S5) a purchase order message (d), comprising information about the purchase order, to the mobile radio device (1);
receive (S6), in response to the purchase order message (d), a user confirmation message (e) from the mobile radio device (1), confirming the purchase order;
send (S7) a payment request (f) to a payment executor (10), instructing the payment executor to execute payment of the price using the payment details of the user;
receive (S8) a payment confirmation (g) from the payment executor (10), confirming the payment of the price;
send (S9) a customer receipt (h) to the mobile radio device (1), for informing the user that the payment has been executed; and
send (S10) a payment confirmation message (i) to a cashier server arrangement (11) of the store (4), for indicating that the payment has been executed.

15. An application software (43) for enabling a mobile radio device (1) to run a service provided by a service provider (9) for facilitating purchase of at least one item in a store (4) by a user of the radio device, the application software comprising computer program code which is able to, when run on processor circuitry (31) of the radio device, cause the radio device to:
detect (S101) a radio transmitter (2) by receiving, from said radio transmitter, radio signals comprising an identifier message (b) comprising an identifier of the radio transmitter;
in response to said detecting (S101) of the radio transmitter (2), automatically send (S102) a detection message (c) over a radio interface to a network server arrangement (3) of the service provider (9), said message comprising an indication that the radio device (1) has detected (S101) the radio transmitter (2) as well as comprising the identifier of said radio transmitter;
in response to the sent (S102) detection message (c), receive (S103) a purchase order message (d) from the network server arrangement (3), comprising information about a purchase order comprising a price of the at least one item in the store (4);
obtain (S104) confirmation of the purchase order via a user interface (35) of the radio device (1);
in response to the obtained (S104) confirmation, automatically send (S105) a user confirmation message (e) to the network server arrangement (3), confirming the purchase order; and
receive (S106) a customer receipt (h) from the network server arrangement (3), indicating that payment of the price has been executed.
